# FASCICULE DE BREVET EUROPEEN

(11) **EP 2 461 448 B1**
(45) Date de publication et mention de la délivrance du brevet: **21.01.2015**
(21) Numéro de dépôt: 11188505.9
(22) Date de dépôt: 09.11.2011
(51) Int. Cl.: H02G 15/064, H02G 15/068

(54) **Terminaison électrique pour très haute tension**
Elektrischer Netzabschluss für sehr hohe Spannung
Electrical termination for very high voltage

(30) Priorité: 01.12.2010 FR 1059971
(43) Date de publication de la demande: 06.06.2012
(73) Titulaire: Nexans, 75008 Paris (FR)
(72) Inventeur: Gaubert, Jean-Bernard, 83400 Hyeres (FR); Streit, Pascal, 1052 Le Mont-Sur-Lausanne (CH); Mirebeau, Pierre, 91140 Villebon Sur Yvette (FR)
(74) Mandataire: Lenne, Laurence

(56) Documents cités:
- JP-A- 11 203 970

## Description

L'invention concerne une terminaison électrique pour très haute tension.

Ces dernières années ont vu le développement d'isolateurs en polymère comportant un cylindre interne isolant et un cylindre externe recouvrant le précédent. Une matière plastique renforcée de fibres de verre ou équivalent, présentant de bonnes propriétés isolantes et une bonne résistance, peut être utilisée pour le cylindre interne et un matériau polymère, par exemple un caoutchouc de silicone, peut être utilisé pour le cylindre externe qui comporte des ailettes externes.

De tels isolateurs ont l'avantage d'être légers et faciles à manipuler. Par ailleurs, ils assurent une sécurité accrue en cas de défaut interne, relativement aux isolateurs en porcelaine qui peuvent exploser et projeter des débris et aux isolateurs remplis d'huile qui peut être libérée et brûler.

Le document de brevet JP H11-203970 décrit une telle terminaison qui comporte deux éléments essentiels, un isolateur en polymère et un cône déflecteur en matériau souple contenu dans cet isolateur.

L'objet de l'invention est de perfectionner la tenue électrique d'une telle terminaison en particulier à haute tension. En effet à des tensions supérieures à 220 kV, une terminaison telle que décrite dans ce document antérieur pose un problème de courant de fuite.

Pour résoudre ce problème, l'invention propose une terminaison pour très haute tension comportant autour d'un conducteur central, un cône déflecteur en matériau souple recouvert d'un isolateur en polymère comportant un premier élément interne isolant et contenant un déflecteur conducteur, ledit conducteur étant connecté à une borne de sortie, caractérisée en ce que le diamètre maximal dudit premier élément isolant au droit de la longueur dudit cône déflecteur comprise entre ledit déflecteur conducteur et l'extrémité adjacente de ladite borne de sortie est supérieur ou égal au double du diamètre maximal dudit déflecteur conducteur.

Selon un mode de réalisation préféré, le diamètre maximal dudit cône déflecteur est inférieur à 2/3 dudit diamètre maximal dudit premier élément isolant.

De préférence, le diamètre maximal D du premier élément isolant est défini en fonction de ladite longueur L du cône déflecteur par la fonction suivante : D = -f(V) x L + k x V, où V est la tension de choc pour laquelle la terminaison est conçue, f(V) est compris entre 0,25 et 0,4 et k est compris entre 0,5 et 0,7.

De préférence, ledit isolateur comporte un second élément externe isolant recouvrant ledit premier élément isolant et présentant des ailettes externes

Ledit cône déflecteur peut être en caoutchouc de silicone.

Ledit premier élément isolant peut être en résine époxy renforcé de charges minérales.

Ledit second élément isolant peut être en caoutchouc de silicone.

L'invention est décrite ci-après plus en détail à l'aide d'une figure ne représentant qu'un mode de réalisation préféré de l'invention.

Une terminaison comporte autour d'un conducteur central 1, un cône déflecteur 2 en matériau souple, de préférence en caoutchouc de silicone, recouvert d'un isolateur en polymère comportant un premier élément constitué d'un cylindre interne isolant 3, de préférence en résine époxy renforcé de charges minérales, et un second élément constitué d'un cylindre externe isolant 4, de préférence en caoutchouc de silicone, recouvrant le premier cylindre 3 et présentant des ailettes externes.

Le cône déflecteur 2 contient un déflecteur en caoutchouc semiconducteur 5. Le conducteur 1 est connecté à son extrémité à une borne de sortie 6 de la terminaison.

Le diamètre maximal D du premier cylindre 3 au droit de la longueur L du cône déflecteur 2 comprise entre le déflecteur conducteur 5 et l'extrémité adjacente de la borne de sortie 6 est supérieur ou égal au double du diamètre maximal d₁ du déflecteur conducteur 5.

Le diamètre du cône déflecteur 2, et donc son diamètre maximal d₂, est inférieur à 2/3 de ce diamètre maximal D du premier cylindre.

De préférence, le diamètre maximal D du premier cylindre est défini en fonction de cette longueur L du cône déflecteur par la fonction suivante : D = -f(V) x L + k x V,
où V est la tension de choc pour laquelle la terminaison est conçue, f(V) est compris entre 0,25 et 0,4 et k est compris entre 0,5 et 0,7.

A titre d'exemples, f(V) est avantageusement de l'ordre de 0,28 pour une tension de 170 kV, de l'ordre de 0,39 pour une tension de l'ordre de 245 kV et de l'ordre de 0,34 pour une tension de 420 kV.

L'invention s'applique en particulier aux très hautes tensions, classiquement comprises entre 225 et 550 kV.

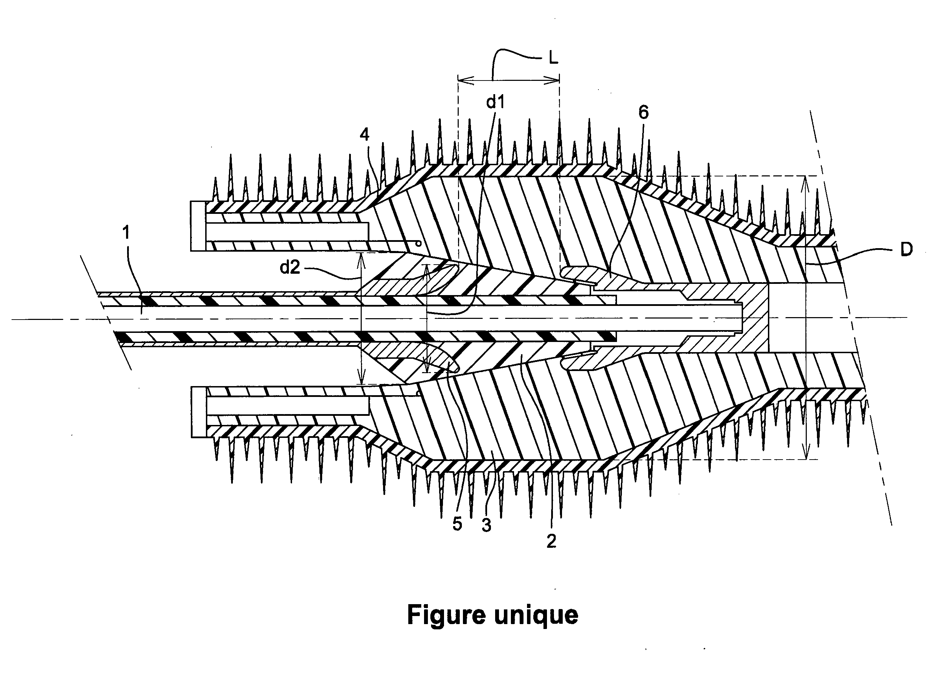

## Revendications

1. Terminaison pour très haute tension comportant autour d'un conducteur central (1), un cône déflecteur (2) en matériau souple recouvert d'un isolateur en polymère comportant un premier élément interne isolant (3) et contenant un déflecteur conducteur (5), ledit conducteur (1) étant connecté à une borne de sortie (6), **caractérisée en ce que** le diamètre maximal (D) dudit premier élément isolant (3) au droit de la longueur (L) dudit cône déflecteur (2) comprise entre ledit déflecteur conducteur (5) et l'extrémité adjacente de ladite borne de sortie (6) est supérieur ou égal au double du diamètre maximal (d₁) dudit déflecteur conducteur (5).

2. Terminaison selon la revendication précédente, **caractérisée en ce que** le diamètre maximal (d₂) dudit cône déflecteur (2) est inférieur à 2/3 dudit diamètre maximal (D) dudit premier élément isolant (3).

3. Terminaison selon l'une des revendications précédentes, **caractérisée en ce que** ledit diamètre maximal D du premier élément isolant (3) est défini en fonction de ladite longueur L du cône déflecteur (2) par la fonction suivante : D = -f(V) x L + k x V, où V est la tension de choc pour laquelle la terminaison est conçue, f(V) est compris entre 0,25 et 0,4 et k est compris entre 0,5 et 0,7.

4. Terminaison selon l'une des revendications précédentes, **caractérisée en ce que** ledit isolateur comporte un second élément externe isolant (4) recouvrant ledit premier élément isolant (3) et présentant des ailettes externes.

5. Terminaison selon l'une des revendications précédentes, **caractérisée en ce que** ledit cône déflecteur (2) est en caoutchouc de silicone.

6. Terminaison selon l'une des revendications précédentes, **caractérisée en ce que** ledit premier élément isolant (3) est en résine époxy renforcé de charges minérales.

7. Terminaison selon la revendication 4, **caractérisée en ce que** ledit second élément isolant (4) est en caoutchouc de silicone.

## Patentansprüche

1. Netzabschluss für sehr hohe Spannung, der um einen zentralen Leiter (1) einen Deflektorkonus (2) aus elastischem Material aufweist, der von einem Isolator aus Polymer bedeckt ist, der ein erstes inneres Isolierelement (3) aufweist, und einen Deflektorleiter (5) enthält, wobei der Leiter (1) an eine Ausgangsklemme (6) angeschlossen ist, **dadurch gekennzeichnet, dass** der maximale Durchmesser (D) des ersten Isolierelements (3) entlang der Länge (L) des Deflektorkonus (2) zwischen dem Deflektorleiter (5) und dem benachbarten Ende der Ausgangsklemme (6) größer oder gleich dem Doppelten des maximalen Durchmessers (d₁) des Deflektorleiters (5) ist.

2. Netzabschluss nach vorangehendem Anspruch, **dadurch gekennzeichnet, dass** der maximale Durchmesser (d₂) des Deflektorkonus (2) 2/3 kleiner ist als der maximale Durchmesser (D) des ersten Isolierelements (3) ist.

3. Netzabschluss nach einem der vorangehenden Ansprüche, **dadurch gekennzeichnet, dass** der maximale Durchmesser D des ersten Isolierelements (3) in Abhängigkeit von der Länge L des Deflektorkonus (2) durch die folgende Funktion definiert ist: D = -f(V) x L + k x V, wobei V die Stoßspannung ist, für die der Netzabschluss konstruiert ist, f(V) zwischen 0,25 und 0,4 inklusive ist und k zwischen 0,5 und 0,7 inklusive ist.

4. Netzabschluss nach einem der vorangehenden Ansprüche, **dadurch gekennzeichnet, dass** der Isolator ein zweites äußeres Isolierelement (4) aufweist, das das erste Isolierelement (3) bedeckt und äußere Flügel aufweist.

5. Netzabschluss nach einem der vorangehenden Ansprüche, **dadurch gekennzeichnet, dass** der Deflektorkonus (2) aus Silikongummi ist.

6. Netzabschluss nach einem der vorangehenden Ansprüche, **dadurch gekennzeichnet, dass** das erste Isolierelement (3) aus mit mineralischen Chargen verstärktem Epoxidharz ist.

7. Netzabschluss nach Anspruch 4, **dadurch gekennzeichnet, dass** das zweite Isolierelement (4) aus Silikongummi ist.

## Claims

1. A termination for very high voltage comprising, around a central conductor (1), a deflector cone (2) made from a flexible material covered by a polymer insulator comprising a first inner insulating element (3) and containing a conductive deflector (5), said conductor (1) being connected to an output terminal (6), **characterized in that** the maximum diameter (D) of said first insulating element (3) at the length (L) of said deflector code (2) comprised between said conductive deflector (5) and the adjacent end of said output terminal (6) is greater than or equal to twice the diameter (d₁) of said conductive deflector (5).

2. The termination according to the preceding claim, **characterized in that** the maximum diameter (d₂) of said deflector cone (2) is less than 2/3 of said maximum diameter (D) of said first insulating element (3).

3. The termination according to one of the preceding claims, **characterized in that** said maximum diameter D of the first insulating element (3) is defined as a function of said length L of the deflector cone (2) using the following function: D = -f(V) x L + k x V, where V is the surge voltage for which the termination is designed, f(V) is comprised between 0.25 and 0.4, and k is comprised between 0.5 and 0.7.

4. The termination according to one of the preceding claims, **characterized in that** said insulator comprises a second outer insulating element (4) covering said first insulating element (3) and having outer fins.

5. The termination according to one of the preceding claims, **characterized in that** said deflector cone (2) is made from silicone rubber.

6. The termination according to one of the preceding claims, **characterized in that** said first insulating element (3) is made from epoxy resin reinforced with mineral filler.

7. The termination according to claim 4, **characterized in that** said second insulating element (4) is made from silicone rubber.
